# EUROPEAN PATENT SPECIFICATION

(11) **EP 3 528 327 B1**
(45) Date of publication and mention of the grant of the patent: **19.07.2023**
(21) Application number: 16918514.7
(22) Date of filing: 12.10.2016
(51) Int. Cl.: H01M 8/18, H01M 8/02, H01M 8/0247, H01M 8/24

(54) **BIPOLAR PLATE, CELL FRAME, CELL STACK, AND REDOX FLOW CELL**
BIPOLARE PLATTE, ZELLENRAHMEN, ZELLENSTAPEL UND REDOX-DURCHFLUSSBATTERIE
PLAQUE BIPOLAIRE, CHÂSSIS DE CELLULE, EMPILEMENT DE CELLULES ET BATTERIE À FLUX RÉDOX

(43) Date of publication of application: 21.08.2019
(73) Proprietor: Sumitomo Electric Industries, Ltd., Osaka-shi, Osaka 541-0041 (JP)
(72) Inventor: KANNO, Takashi, Osaka-shi Osaka 554-0024 (JP); MOTOI, Kenji, Osaka-shi Osaka 554-0024 (JP)
(74) Representative: Boult Wade Tennant LLP
(86) International application number: PCT/JP2016/080270
(87) International publication number: WO 2018/069996

(56) References cited:
- WO-A1-2011/112520
- WO-A1-2015/162954
- WO-A2-2014/167306
- JP-A- 2015 505 147
- JP-A- 2015 505 147

## Description

### Technical Field

The present invention relates to a bipolar plate, a cell frame, a cell stack, and a redox flow battery.

### Background Art

Redox flow batteries (hereinafter, may be referred to as "RF batteries") are known as one of large-capacity storage batteries (refer to PTL 1 to PTL 4). A redox flow battery includes a cell stack obtained by stacking pluralities of cell frames, positive electrodes, membranes, and negative electrodes. A cell frame includes a bipolar plate disposed between a positive electrode and a negative electrode and a frame body provided on the outer periphery of the bipolar plate. In the cell stack, a positive electrode, a negative electrode, a membrane disposed therebetween are disposed between bipolar plates of adjacent cell frames, to thereby form a single cell. The RF battery performs charging and discharging by causing an electrolyte to flow and circulate in a cell in which the electrodes are disposed.

PTL 1 to PTL 4 disclose techniques for reducing pressure loss due to a flow resistance of an electrolyte in a cell by forming a plurality of grooves that constitute a flow channel of the electrolyte in a surface of a bipolar plate, the surface facing an electrode, in order to reduce the internal resistance of an RF battery.

### Citation List

### Patent Literature

PTL 1: Japanese Unexamined Patent Application Publication No. 2015-122230
PTL 2: Japanese Unexamined Patent Application Publication No. 2015-122231
PTL 3: Japanese Unexamined Patent Application Publication No. 2015-138771
PTL 4: Japanese Unexamined Patent Application Publication No. 2015-210849

### Summary of Invention

A bipolar plate of the present disclosure is
a bipolar plate disposed between a positive electrode and a negative electrode of a redox flow battery, the bipolar plate having,
in a surface of the bipolar plate facing at least one of the positive electrode and the negative electrode, at least one groove through which an electrolyte flows,
in which the groove has a pair of sidewalls facing each other in a cross section orthogonal to a direction in which the electrolyte flows, and
the groove has a narrow portion in which a distance between the sidewalls decreases in a depth direction of the groove, the narrow portion being provided in at least a part of the groove in the depth direction.

A cell frame of the present disclosure includes the bipolar plate of the present disclosure and a frame body disposed on an outer periphery of the bipolar plate.

A cell stack of the present disclosure includes the cell frame of the present disclosure.

A redox flow battery of the present disclosure includes the cell stack of the present disclosure.

### Brief Description of Drawings

[Fig. 1] Figure 1 is an operating principle diagram of a redox flow battery according to an embodiment.
[Fig. 2] Figure 2 is a schematic view illustrating a configuration of a redox flow battery according to an embodiment.
[Fig. 3] Figure 3 is a schematic view illustrating a configuration of a cell stack according to an embodiment.
[Fig. 4] Figure 4 is a schematic planar view of a cell frame including a bipolar plate according to an embodiment, viewed from one surface side thereof.
[Fig. 5] Figure 5 is a schematic cross-sectional view illustrating a cross-sectional shape of a groove in a bipolar plate according to Embodiment 1.
[Fig. 6] Figure 6 is a schematic cross-sectional view illustrating a cross-sectional shape of a groove in a bipolar plate according to Embodiment 2.
[Fig. 7] Figure 7 is a schematic cross-sectional view illustrating a cross-sectional shape of a groove in a bipolar plate according to Embodiment 3.
[Fig. 8] Figure 8 is a schematic cross-sectional view illustrating a cross-sectional shape of a groove in a bipolar plate according to Embodiment 4.
[Fig. 9] Figure 9 is a schematic cross-sectional view illustrating a cross-sectional shape of a groove in a bipolar plate according to Embodiment 5.
[Fig. 10(a)] Figure 10(a) is a schematic cross-sectional view illustrating a modification of a cross-sectional shape of a groove.
[Fig. 10(b)] Figure 10(b) is a schematic cross-sectional view illustrating another modification of a cross-sectional shape of a groove.
[Fig. 10(c)] Figure 10(c) is a schematic cross-sectional view illustrating still another modification of a cross-sectional shape of a groove.
[Fig. 11] Figure 11 is a schematic cross-sectional view illustrating another modification of a cross-sectional shape of a groove.

### Description of Embodiments

### [Technical Problem]

Further improvements in battery performances of redox flow batteries have been desired.

In an RF battery, operation and standby are repeated in some cases. During operation, the RF battery causes an electrolyte to flow in a cell to perform charging and discharging. During a standby period, the RF battery stops the flow of the electrolyte. When the flow of the electrolyte is stopped during the standby period of the RF battery, self-discharge of the charged electrolyte occurs in the cell, and the electrolyte thereby generates heat. A precipitate may be generated in the electrolyte with an increased in the temperature, which may result in a decrease in the battery performance, such as degradation of the electrolyte. In addition, an increase in the temperature of the electrolyte may damage a bipolar plate (cell frame), for example, may cause softening and deformation of the bipolar plate due to the heat. Accordingly, in order to suppress an increase in the temperature of the electrolyte in the cell, it is desirable to improve heat dissipation of the electrolyte.

Accordingly, an object of the present disclosure is to provide a bipolar plate, a cell frame, and a cell stack capable of suppressing an increase in the temperature of an electrolyte while being capable of reducing pressure loss of the electrolyte in a cell. Another object of the present disclosure is to provide a redox flow battery having a good battery performance.

### [Advantageous Effects of the Present Disclosure]

The present disclosure can provide a bipolar plate, a cell frame, and a cell stack capable of suppressing an increase in the temperature of an electrolyte while being capable of reducing pressure loss of the electrolyte in a cell. Furthermore, the present disclosure can provide a redox flow battery having a good battery performance.

### [Description of Embodiments of the Present Invention]

The inventors of the present invention examined that pressure loss of an electrolyte in a cell of a redox flow battery is reduced by forming a groove in a surface of a bipolar plate, the surface facing an electrode, in a direction in which the electrolyte flows to constitute a flow channel. Furthermore, in a bipolar plate having a groove through which an electrolyte flows, in order to suppress precipitation of an electrolyte component in a cell, the inventors of the present invention examined a cross-sectional shape of the groove with which heat dissipation of the electrolyte can be improved to suppress an increase in the temperature of the electrolyte. The "cross-sectional shape of a groove" means a shape of a cross section orthogonal to a direction in which an electrolyte flows and is shown by a closed region surrounded by wall surfaces constituting a groove and an opening in the cross section. In the description below, unless otherwise stated, the term "cross section of a groove" refers to a cross section orthogonal to a direction in which an electrolyte flows.

In a case of a bipolar plate having a groove, when an electrolyte is caused to flow in a cell during operation of an RF battery, the electrolyte flows through the groove, and when the flow of the electrolyte is stopped during a standby period of the RF battery, the electrolyte stays in the groove. The heat of the electrolyte whose temperature is increased by self-discharge, the electrolyte being present in the groove, is dissipated from the wall surfaces of the groove that is in contact with the electrolyte, and the electrolyte is cooled. Therefore, in a part of the electrolyte in the groove, the part being in contact with the wall surfaces of the groove, the temperature of the electrolyte is decreased by heat conduction, and convection of the electrolyte is caused by the difference in temperature. It is believed that if this convection can be accelerated, the movement of heat from the electrolyte in the groove to the wall surfaces of the groove is accelerated to improve the heat dissipation efficiency of the electrolyte. In view of this, the inventors of the present invention examined various cross-sectional shapes of the groove capable of accelerating convection of an electrolyte.

The cross-sectional shape of the groove is usually a substantially square shape and is a shape having a bottom wall parallel to a surface of a bipolar plate and a pair of sidewalls that extend from the surface of the bipolar plate in a direction perpendicular to the bottom wall and that face each other in parallel. In this case, the distance between the sidewalls is substantially uniform over the entire groove in the depth direction of the groove, and an angle formed by each sidewall and the bottom wall is the right angle (90°). The term "depth direction of the groove" refers to a direction that extends, in a cross section orthogonal to a direction in which an electrolyte flows, from an opening toward a bottom of the groove and that is perpendicular to a surface of the bipolar plate (that is, a thickness direction of the bipolar plate).

The inventors of the present invention conceived that, in order to accelerate convection of an electrolyte, the cross-sectional shape of the groove has a narrow portion in which the distance between the sidewalls decreases in the depth direction. In this groove, at least one of the sidewalls is inclined in the narrow portion with respect to the depth direction. Accordingly, it is believed that when convection of the electrolyte occurs in the groove, this structure accelerates the convection of the electrolyte that moves along the sidewall. Therefore, in a groove having such a cross-sectional shape, convection of the electrolyte is accelerated compared with the case of a groove whose sidewalls face each other and are disposed in parallel in the depth direction. Thus, heat dissipation of the electrolyte can be presumably improved to suppress an increase in the temperature of the electrolyte.

The inventors of the present invention completed the present invention on the basis of the idea described above. First, the contents of embodiments of the present invention will be listed and described.
(1) A bipolar plate according to an embodiment is
   a bipolar plate disposed between a positive electrode and a negative electrode of a redox flow battery, the bipolar plate having,
   in a surface of the bipolar plate facing at least one of the positive electrode and the negative electrode, at least one groove through which an electrolyte flows,
   in which the groove has a pair of sidewalls facing each other in a cross section orthogonal to a direction in which the electrolyte flows, and
   the groove has a narrow portion in which a distance between the sidewalls decreases in a depth direction of the groove, the narrow portion being provided in at least a part of the groove in the depth direction.

According to the bipolar plate, since the groove is provided in a surface facing an electrode, the flow resistance of the electrolyte flowing through the electrode in a cell is reduced to reduce pressure loss of the electrolyte in the cell. Accordingly, pump loss due to the pressure loss of the electrolyte can be reduced. In addition, since the groove has, on a cross section thereof, a narrow portion in which the distance between the sidewalls decreases in the depth direction, convection of the electrolyte is accelerated. Specifically, in the narrow portion, at least one of the sidewalls is inclined with respect to the depth direction, and convection of the electrolyte that moves along the inclined surface of the sidewall can be accelerated. As a result, the heat dissipation effect of the electrolyte due to convection improves, and thus heat dissipation of the electrolyte can be improved to suppress an increase in the temperature of the electrolyte. Accordingly, precipitation of an electrolyte component can be suppressed, and degradation of the electrolyte can be suppressed. Softening and deformation of the bipolar plate due to the influence of heat of the electrolyte can be suppressed. Therefore, according to the bipolar plate, an increase in the temperature of the electrolyte can be suppressed while pressure loss of the electrolyte in the cell can be decreased. Thus, the battery performance of a redox flow battery can be improved.

The "narrow portion" refers to a portion in which the distance between the sidewalls continuously changes so as to be gradually narrow toward a depth direction (from the opening side to the bottom side) of the groove. In the narrow portion, at least one of the sidewalls is inclined with respect to the depth direction. One of the sidewalls may be inclined with respect to the depth direction, and the other sidewall may be oriented along the depth direction. The two sidewalls may be inclined with respect to the depth direction. The expression "along the depth direction" means being substantially parallel to the depth direction (that is, being perpendicular to a surface of the bipolar plate from the opening side toward the bottom side). The term "surface of the bipolar plate" refers to a surface that faces an electrode and comes in contact with the electrode. The narrow portion is provided in at least a part of the groove in the depth direction. The narrow portion may be formed on a part in the depth direction, and the other part may have a substantially uniform distance between the sidewalls. For example, a portion in which the distance between the sidewalls is substantially uniform and equal to the width of the opening may be present from the opening to a halfway position in the depth direction. The number of the narrow portions may be one, or two or more. The narrow portion is preferably formed over the entire groove in the depth direction.

(2) In an embodiment of the bipolar plate,
the groove has a bottom wall, and
the bottom wall has a flat surface parallel to the surface of the bipolar plate.

When the bottom wall has a flat surface parallel to the surface of the bipolar plate, the perimeter of the groove can be made longer than that of a groove having a square cross-sectional shape in the case where these grooves are assumed to have the same cross-sectional area. An increase in the perimeter of the groove increases the contact area with the electrolyte accordingly and increases the heat transfer from the electrolyte to the wall surfaces of the groove to thereby improve the heat dissipation effect of the electrolyte due to heat conduction. Accordingly, heat dissipation of the electrolyte can be further improved to further suppress an increase in the temperature of the electrolyte. The term "perimeter of a groove" refers to a perimeter of a cross section orthogonal to a direction in which the electrolyte flows and is represented, on the cross section, by the total length of the perimeter of wall surfaces that constitute a groove (the total length of the sidewalls and the bottom wall) and the width of an opening.

(3) In an embodiment of the bipolar plate according to (2) above,
an angle formed by at least one of the sidewalls and the bottom wall is 91° or more and 120° or less.

When the angle formed by the sidewall and the bottom wall is a right angle (90°) as in a groove having a square cross-sectional shape, convection along a corner between the sidewall and the bottom wall is unlikely to occur, and it is difficult to accelerate, in the vicinity of the corner, heat dissipation of the electrolyte due to convection. When the angle formed by the sidewall and the bottom wall is 91° or more, in the corner between the sidewall and the bottom wall, convection of the electrolyte easily occurs along an inclined surface of the sidewall to accelerate heat dissipation of the electrolyte in the vicinity of the corner. At an angle formed by the sidewall and the bottom wall of 120° or less, when a groove is assumed to have a certain cross-sectional area, the perimeter of the groove is not excessively long, and an excessive increase in the pressure loss during flow of the electrolyte can be suppressed. The larger the cross-sectional area of the groove, or the shorter the perimeter of the groove, the lower the pressure loss. Therefore, when the cross-sectional area is assumed to be the same, a shorter perimeter enables the pressure loss to decrease. Furthermore, when the angle formed by the sidewall and the bottom wall is 120° or less, the groove does not have an excessively shallow depth to facilitate the formation of the groove. For example, the groove may be formed at the same time when the bipolar plate is formed. Alternatively, the groove may be formed by cutting. In addition, when the angle formed by the sidewall and the bottom wall is 120° or less, the opening of the groove does not have an excessively wide width. Accordingly, in the case where a plurality of grooves are formed in parallel in the bipolar plate, a larger number of grooves can be formed. The angle formed by the sidewall and the bottom wall is preferably, for example, 95° or more and 110° or less.

(4) In an embodiment of the bipolar plate according to (2) or (3) above,
a corner between at least one of the sidewalls and the bottom wall is formed to have a curved surface.

When the corner between the sidewall and the bottom wall is formed to have a curved surface, convection of the electrolyte easily occurs along the corner to accelerate heat dissipation of the electrolyte in the vicinity of the corner. For example, the radius of curvature of the corner may be 0.1 mm or more and 10 mm or less, and furthermore, 0.2 mm or more and 5 mm or less.

(5) In an embodiment of the bipolar plate,
at least one of the sidewalls in the narrow portion has an inclined surface that is inclined with respect to the depth direction, and the inclined surface is a flat surface.

When the inclined surface of the sidewall in the narrow portion is a flat surface, the groove can be easily formed with high accuracy, for example, in the case of forming the groove by cutting.

(6) In an embodiment of the bipolar plate,
at least one of the sidewalls in the narrow portion has an inclined surface that is inclined with respect to the depth direction, and the inclined surface is a curved surface.

When the inclined surface of the sidewall in the narrow portion is a curved surface, convection of the electrolyte that moves along the inclined surface is more easily accelerated to further improve the heat dissipation efficiency of the electrolyte due to the convection.

(7) In an embodiment of the bipolar plate,
the groove has a bottom wall, and
the bottom wall has a curved surface that protrudes in the depth direction of the groove.

When the bottom wall has a curved surface that protrudes in the depth direction of the groove, convection of the electrolyte easily occurs along the curved surface of the bottom wall to accelerate heat dissipation of the electrolyte in the vicinity of the bottom wall.

(8) In an embodiment of the bipolar plate according to (7) above,
an entire surface of the sidewalls and the bottom wall is formed to have a curved surface.

When the entire surface of the sidewalls and the bottom wall is formed to have a curved surface, that is, the entire wall surface of the groove is formed to have a curved surface, convection of the electrolyte easily occurs along the wall surface (sidewalls and bottom wall) of the groove to further improve the heat dissipation efficiency of the electrolyte due to the convection.

(9) In an embodiment of the bipolar plate,
a distance between the sidewalls at any position of the groove in the depth direction is equal to or less than a distance between the sidewalls at a position nearer to an opening than the position.

In this case, the distance between the sidewalls is equal to or less than the width of the opening over the entire groove in the depth direction, and the distance between the sidewalls is the widest in the opening and the narrowest in the bottom. The distance between the sidewalls decreases from the opening toward the bottom, and there is no portion where the distance between the sidewalls increases in a halfway position in the depth direction. Accordingly, the groove is easily formed. For example, the distance between the sidewalls at a position corresponding to half the depth of the groove from the bottom may be smaller than the distance between the sidewalls in the opening. Alternatively, the distance between the sidewalls may gradually decreases in a portion nearer to the bottom than a position corresponding to 1/4 the depth of the groove from the bottom.

(10) A cell frame according to an embodiment includes the bipolar plate according to any one of (1) to (9) above and a frame body disposed on an outer periphery of the bipolar plate.

Since the cell frame includes the bipolar plate according to the embodiment described above, an increase in the temperature of an electrolyte can be suppressed while pressure loss of the electrolyte in a cell can be decreased. Thus, the battery performance of a redox flow battery can be improved.

(11) A cell stack according to an embodiment includes the cell frame according to (10) above.

Since the cell stack includes the cell frame according to the embodiment described above, an increase in the temperature of an electrolyte can be suppressed while pressure loss of the electrolyte in a cell can be decreased. Thus, the battery performance of a redox flow battery can be improved.

(12) A redox flow battery according to an embodiment includes the cell stack according to (11) above.

Since the redox flow battery includes the cell stack described above, an increase in the temperature of an electrolyte can be suppressed while pressure loss of the electrolyte in a cell can be decreased. Thus, the redox flow battery has a good battery performance.

### [Details of Embodiments of the Present Invention]

Specific examples of a bipolar plate, a cell frame, a cell stack, and a redox flow battery (RF battery) according to embodiments of the present invention will be described below with reference to the drawings. The same reference signs in the drawings denote the same or corresponding parts. The present invention is not limited to the examples. The scope of the present invention is defined by the appended claims, and is intended to cover all modifications within the meaning and scope equivalent to those of the claims.

### «RF Battery»

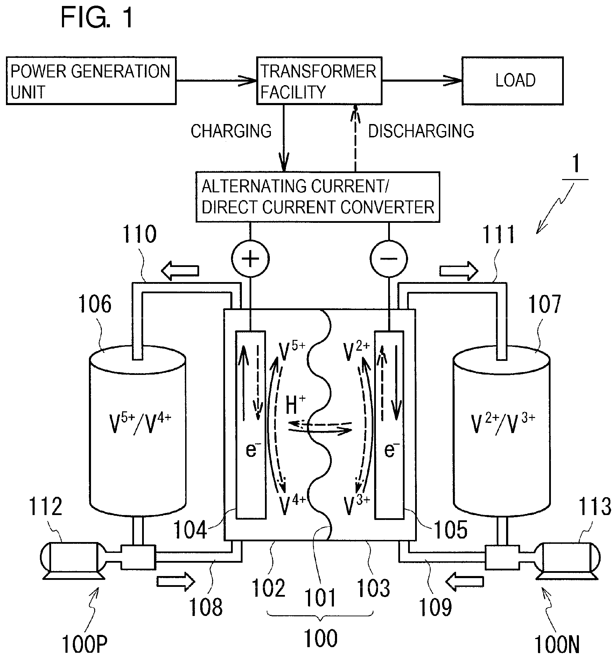

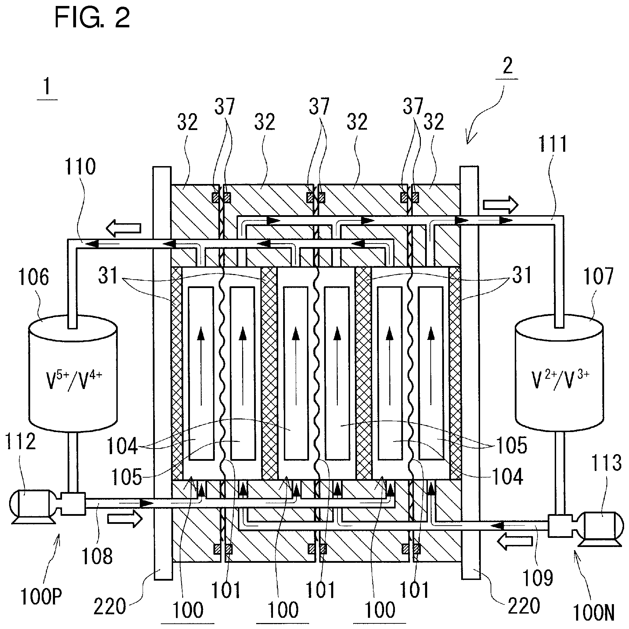

An example of a redox flow battery (hereinafter, referred to as an "RF battery") according to an embodiment will be described with reference to Figs. 1 and 2. An RF battery 1 uses a positive electrode electrolyte and a negative electrode electrolyte, each containing, as an active material, metal ions whose valence is changed by oxidation-reduction, and performs charging and discharging using the difference between the oxidation-reduction potential of ions contained in the positive electrode electrolyte and the oxidation-reduction potential of ions contained in the negative electrode electrolyte. An example of the RF battery 1 described here is a vanadium-based RF battery that uses, as each of the positive electrode electrolyte and the negative electrode electrolyte, a vanadium electrolyte containing V ions serving as an active material. In a cell 100 illustrated in Fig. 1, the solid-line arrows indicate a charging reaction, and the broken-line arrows indicate a discharging reaction. For example, the RF battery 1 is used for load leveling, for voltage sag compensation and emergency power sources, and for smoothing the output of natural energy, such as solar power generation or wind power generation that is being introduced on a massive scale.

The RF battery 1 includes a cell 100 that is separated into a positive electrode cell 102 and a negative electrode cell 103 by a membrane 101 that allows hydrogen ions to permeate therethrough. The positive electrode cell 102 contains a positive electrode 104 and is connected via ducts 108 and 110 to a positive electrode electrolyte tank 106 that stores a positive electrode electrolyte. The duct 108 is provided with a pump 112 for pressure-feeding the positive electrode electrolyte to the positive electrode cell 102. The members 106, 108, 110, and 112 constitute a positive electrolyte circulation mechanism 100P for circulating the positive electrode electrolyte. Similarly, the negative electrode cell 103 contains a negative electrode 105 and is connected via ducts 109 and 111 to a negative electrode electrolyte tank 107 that stores a negative electrode electrolyte. The duct 109 is provided with a pump 113 for pressure-feeding the negative electrode electrolyte to the negative electrode cell 103. The members 107, 109, 111, and 113 constitute a negative electrolyte circulation mechanism 100N for circulating the negative electrode electrolyte. The electrolytes stored in the tanks 106 and 107 are circulated within the cell 100 (positive electrode cell 102 and negative electrode cell 103) by the pumps 112 and 113 during operation in which charging and discharging are performed. During a standby period in which charging and discharging are not performed, the pumps 112 and 113 are stopped, and the electrolytes stored in the tanks 106 and 107 are not circulated.

### «Cell Stack»

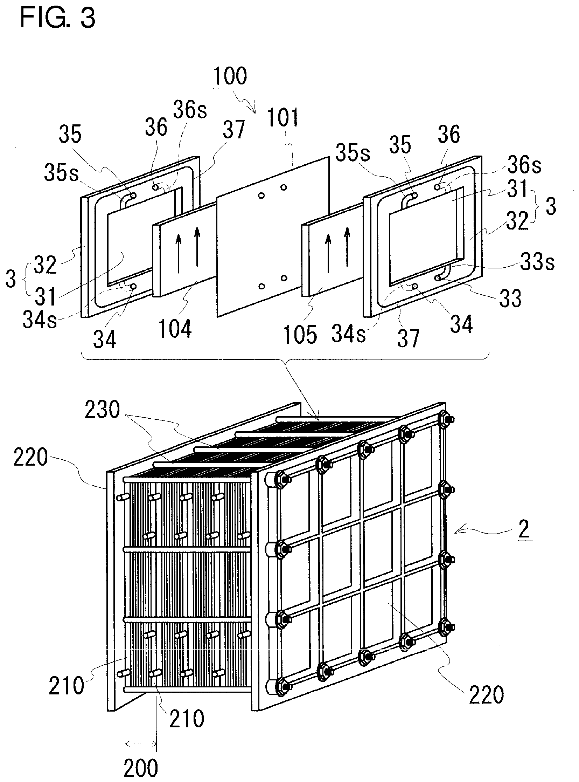

A cell 100 is usually formed inside a structure referred to as a cell stack 2, as illustrated in Figs. 2 and 3. The cell stack 2 is configured such that a layered body referred to as a substack 200 (refer to Fig. 3) is sandwiched between two end plates 220 and the end plates 220 on both sides are fastened with a fastening mechanism 230 (in the configuration illustrated in Fig. 3 as an example, a plurality of substacks 200 are provided). The substack 200 has a configuration in which pluralities of cell frames 3, positive electrodes 104, membranes 101, and negative electrodes 105 are stacked, and supply/discharge plates 210 (refer to the view illustrated in the lower part of Fig. 3; omitted in Fig. 2) are disposed on both ends of the resulting layered body.

### «Cell Frame»

As illustrated in Figs. 2 and 3, a cell frame 3 includes a bipolar plate 31 disposed between a positive electrode and a negative electrode, and a frame body 32 provided on the outer periphery of the bipolar plate 31. A positive electrode 104 is disposed so as to be in contact with the one surface side of the bipolar plate 31, and a negative electrode 105 is disposed so as to be in contact with the other surface side of the bipolar plate 31. In the substack 200 (cell stack 2), one cell 100 is formed between bipolar plates 31 of respective adjacent cell frames 3.

The bipolar plate 31 is formed of, for example, a carbon plastic or the like. The frame body 32 is formed of, for example, a plastic such as a vinyl chloride resin (PVC), polypropylene, polyethylene, a fluorine resin, or an epoxy resin. The bipolar plate 31 is formed by a known method, such as injection molding, press molding, or vacuum molding. In the cell frame 3, the frame body 32 is integrated on the outer periphery of the bipolar plate 31 by injection molding or the like.

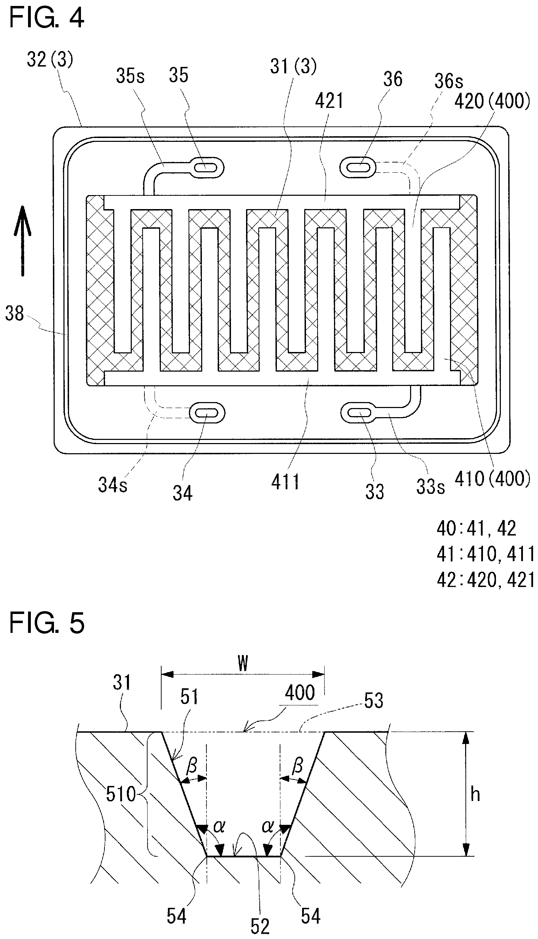

The electrolytes are made to flow to the cell 100 through the supply/discharge plates 210 (refer to the view illustrated in the lower part of Fig. 3) by means of liquid supply manifolds 33 and 34 and liquid discharge manifolds 35 and 36 provided so as to pass through the frame body 32 of the cell frame 3 illustrated in Fig. 3, and liquid supply slits 33s and 34s and liquid discharge slits 35s and 36s formed in the frame body 32 (also refer to Fig. 4). In this example, the positive electrode electrolyte is supplied from the liquid supply manifold 33 through the liquid supply slit 33s formed on the one surface side (front side of the sheet) of the frame body 32 to the positive electrode 104 and is discharged through the liquid discharge slit 35s formed in the upper part of the frame body 32 to the liquid discharge manifold 35. Similarly, the negative electrode electrolyte is supplied from the liquid supply manifold 34 through the liquid supply slit 34s formed on the other surface side (back side of the sheet) of the frame body 32 to the negative electrode 105 and is discharged through the liquid discharge slit 36s formed in the upper part of the frame body 32 to the liquid discharge manifold 36. Ring-shaped sealing members 37, such as O-rings and flat packings, (refer to Figs. 2 and 3) are disposed between the frame bodies 32 of the cell frames 3 so as to suppress leakage of the electrolytes. The frame body 32 is provided with sealing grooves 38 (refer to Fig. 4) for disposing the sealing members 37.

### «Bipolar Plate»

An example of a bipolar plate 31 according to an embodiment will be described mainly with reference to Fig. 4. The bipolar plate 31 has a substantially rectangular planer shape. One surface side (front side of the sheet) of the bipolar plate 31 illustrated in Fig. 4 is a surface facing a positive electrode 104 (refer to Fig. 3). The other surface side (back side of the sheet) of the bipolar plate 31 is a surface facing a negative electrode 105 (refer to Fig. 3). In the bipolar plate 31 illustrated in Fig. 4, a lower edge portion connected to a liquid supply slit 33s corresponds to the supply side of a positive electrode electrolyte, and an upper edge portion connected to a liquid discharge slit 35s corresponds to the discharge side of the positive electrode electrolyte. Specifically, the bipolar plate 31 is configured so that an electrolyte is supplied from the lower side of the bipolar plate 31 and the electrolyte is discharged from the upper side of the bipolar plate 31. Thus, the electrolyte flows from the lower edge portion of the bipolar plate 31 toward the upper edge portion thereof. In Fig. 4, the arrow on the left side of the sheet indicates an overall direction in which an electrolyte flows in the bipolar plate 31.

As illustrated in Fig. 4, the bipolar plate 31 includes a flow channel 40 having a plurality of grooves 400 on the one surface side thereof. In Fig. 4, for the sake of ease of understanding, a portion where the flow channel 40 (grooves 400) is not formed is marked by hatching. The grooves 400 are formed in the direction in which the electrolyte flows and arranged in parallel at regular intervals. In this example, as the grooves 400, introduction grooves 410 and discharge grooves 420 are alternately arranged in parallel in which one end of each of the introduction grooves 410 communicates with the lower edge portion of the bipolar plate 31 and the other end thereof is disposed so as to leave a certain gap between the other end and the upper edge portion, and one end of each of the discharge grooves 420 communicates with the upper edge portion of the bipolar plate 31 and the other end thereof is disposed so as to leave a certain gap between the other end and the lower edge portion. An introduction channel 41 including the introduction grooves 410, and a discharge channel 42 including the discharge grooves 420 are provided as the flow channel 40. In this example, the introduction channel 41 includes an introduction straightening groove 411 formed along the lower edge portion of the bipolar plate 31, and one end of each of the introduction grooves 410 communicates with the introduction straightening groove 411. The discharge channel 42 includes a discharge straightening groove 421 formed along the upper edge portion of the bipolar plate 31, and one end of each of the discharge grooves 420 communicates with the discharge straightening groove 421. The introduction straightening groove 411 distributes an electrolyte supplied from the liquid supply slit 33s to the introduction grooves 410. The discharge straightening groove 421 collects the electrolyte discharged from the discharge grooves 420 to the liquid discharge slit 35s. In this example, the introduction straightening groove 411 and the discharge straightening groove 421 are provided in the bipolar plate 31. Alternatively, the introduction straightening groove 411 and the discharge straightening groove 421 may be provided in the frame body 32.

In this example, the grooves 400 (introduction grooves 410 and the discharge grooves 420) each have the same width and the same depth, and the cross-sectional shapes thereof are substantially the same and uniform in the lengthwise direction. The width and the depth of the grooves 400 and the gap between adjacent grooves 400 can be appropriately selected in accordance with the size, the thickness, and the like of the bipolar plate 31 and are not particularly limited. For example, the gap between adjacent grooves 400 may be 0.5 mm or more and 30 mm or less, and furthermore, 1 mm or more and 5 mm or less. The width (opening width), the depth, and the cross-sectional shape of the grooves 400 will be described later.

The introduction channel 41 is a flow channel for supplying a positive electrode electrolyte to the positive electrode (refer to Fig. 3). The discharge channel 42 is a flow channel for discharging the positive electrode electrolyte. Since the introduction channel 41 and the discharge channel 42 are provided, the positive electrode electrolyte supplied is easily uniformly spread over the entire surface of the positive electrode (refer to Fig. 3). The positive electrode electrolyte supplied from the liquid supply slit 33s to the one surface side of the bipolar plate 31 flows through the introduction grooves 410 through the introduction straightening groove 411 of the introduction channel 41 and spreads over the entire surface of the bipolar plate 31. The positive electrode electrolyte flowing through the introduction grooves 410 permeates through the positive electrode (refer to Fig. 3) disposed on a surface of the bipolar plate 31, flows across the surface of the bipolar plate 31, and flows into the discharge grooves 420 adjacent to the corresponding introduction grooves 410. The positive electrode electrolyte flowing through the discharge grooves 420 of the discharge channel 42 is discharged from the liquid discharge slit 35s through the discharge straightening groove 421.

Although only the one surface side of the bipolar plate 31 is illustrated in here, an introduction channel for supplying a negative electrode electrolyte to the negative electrode 105 (refer to Fig. 3) and a discharge channel for discharging the negative electrode electrolyte are formed on the other surface side of the bipolar plate 31. The configurations of the introduction channel and the discharge channel for the negative electrode electrolyte on the other surface side of the bipolar plate 31 are the same as those of the introduction channel 41 and the discharge channel 42 for the positive electrode electrolyte described in Fig. 4, and thus a description thereof is omitted.

### [Embodiment 1]

### (Cross-Sectional Shape of Groove)

One feature of the bipolar plate 31 according to an embodiment lies in the cross-sectional shape of a groove 400. Figure 5 illustrates a cross-sectional shape of a groove 400 in a bipolar plate 31 according to Embodiment 1. The groove 400 has, on a cross section orthogonal to a direction in which an electrolyte flows, a pair of sidewalls 51 facing with each other, and, in at least a part of the groove 400 in a depth direction of the groove, a narrow portion 510 in which the distance between the sidewalls 51 decreases in the depth direction. Hereafter, a cross-sectional shape of the groove 400 of Embodiment 1 will be described in more detail.

The groove 400 of Embodiment 1 has a bottom wall 52 that connects lower ends (bottom sides) of the pair of sidewalls 51 to each other. The bottom wall 52 has a flat surface parallel to the surface of the bipolar plate 31. The pair of sidewalls 51 is inclined with respect to the depth direction, and the distance between the sidewalls 51 gradually decreases toward the depth direction (from an opening 53 to the bottom wall 52). Each of the entire surfaces of the sidewalls 51 is a surface inclined from the opening 53 to the bottom wall 52, and the inclined surface is a flat surface. Angles β of inclination of the sidewalls 51 (inclined surfaces) with respect to the depth direction are substantially equal to each other. Accordingly, in the groove 400 of Embodiment 1, the narrow portion 510 is formed over the entire groove 400 in the depth direction, and the cross-sectional shape of the groove 400 is a trapezoid (specifically, an isosceles trapezoid) having the opening 53 serving as a long side and the bottom wall 52 serving as a short side.

In this groove 400, a distance between the sidewalls 51 at any position in the depth direction is equal to or less than a distance between the sidewalls 51 at a position nearer to the opening 53 than the position. That is, the distance between the sidewalls 51 is equal to less than the width of the opening 53 over the entire groove 400 in the depth direction and is the widest in the opening 53 and the narrowest in the bottom wall 52.

In the groove 400, an angle α, of a corner 54 formed by each sidewall 51 and the bottom wall 52 is more than 90° and less than 180°, and may be, for example, 91° or more and 120° or less, and preferably 95° or more and 110° or less. The angle β of inclination of each sidewall 51 (inclined surface) with respect to the depth direction may be, for example, 1° or more and 45° or less and furthermore 30° or less, and preferably 5° or more and 20° or less. A width w of the opening 53 may be, for example, 0.5 mm or more and 10 mm or less, and furthermore, 1 mm or more and 5 mm or less. A depth h (length from the opening 53 to the bottom wall 52 in the depth direction) may be, for example, 0.5 mm or more and 10 mm or less, and furthermore, 1 mm or more and 5 mm or less.

### {Operation and Effect}

Since the bipolar plate 31 according to Embodiment 1 has the grooves 400, the bipolar plate 31 enables an electrolyte to flow along the grooves 400. Thus, the flow resistance of the electrolyte is reduced to reduce pressure loss of the electrolyte. In addition, the bipolar plate 31 has the narrow portion 510 in at least a part of each of the grooves 400 in the depth direction, and thus convection of the electrolyte that moves along the inclined surfaces of the sidewalls 51 can be accelerated. Since the heat dissipation efficiency of the electrolyte due to the convection improves, heat dissipation of the electrolyte in the grooves 400 can be improved, and an increase in the temperature of the electrolyte can be suppressed. As a result, precipitation of an electrolyte component can be suppressed. In particular, the sidewalls 51 are inclined with respect to the depth direction, the entire surfaces of the sidewalls 51 are inclined surfaces, and the narrow portion 510 is formed over the entire groove 400 in the depth direction, and thus convection of the electrolyte easily occurs along the sidewalls 51, and a high heat dissipation effect of the electrolyte due to the convection is achieved. Furthermore, since the angle α formed by each sidewall 51 and the bottom wall 52 is 91° or more and 120° or less, convection of the electrolyte easily occurs in the corners 54 along the inclined surfaces of the sidewalls 51, and heat dissipation from the electrolyte can be accelerated in the vicinity of the corners 54.

The cross-sectional shape of each of the grooves 400 of Embodiment 1 is a trapezoid (specifically, an isosceles trapezoid). Thus, the perimeter of the groove 400 is longer than that of a groove 400 having a square cross-sectional shape when these grooves 400 are assumed to have the same cross-sectional area. Therefore, a contact area with the electrolyte is large, and the heat dissipation efficiency of the electrolyte due to the heat conduction improves.

In addition, the distance between the sidewalls 51 decreases from the opening 53 toward the bottom wall 52, and thus there is no portion where the distance between the sidewalls 51 increases in a halfway position in the depth direction. Thus, the grooves 400 are easily formed.

### [Modification]

In Embodiment 1, a description has been made of an embodiment in which the cross-sectional shape of the groove 400 is an isosceles trapezoid, the pair of sidewalls 51 that form the narrow portion 510 are inclined with each other with respect to the depth direction, and the distance between the sidewalls 51 decreases toward the depth direction. Regarding modifications of Embodiment 1, one sidewall 51 of the pair of sidewalls 51 may be inclined with respect to the depth direction, and the other sidewall 51 may be arranged along the depth direction. The angles β of inclination of the sidewalls 51 may be different from each other.

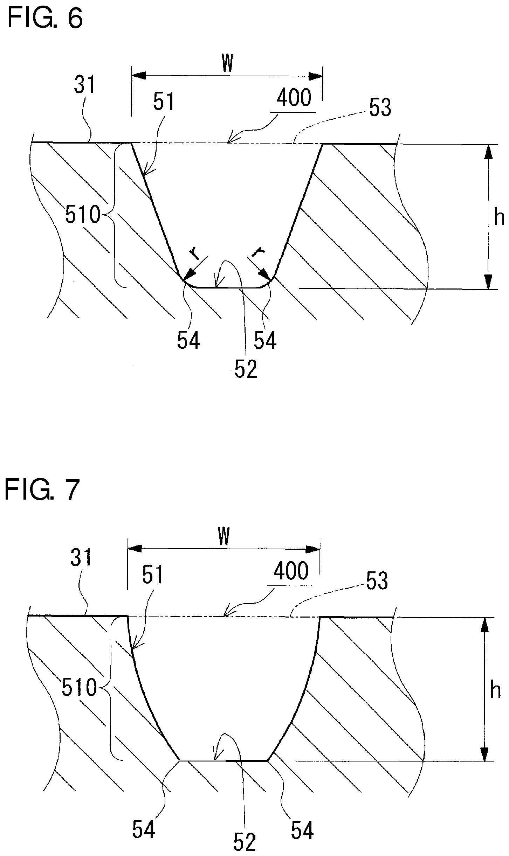

Next, other embodiments of the cross-sectional shape of the groove 400 will be described with reference to Figs. 6 to 9. Hereafter, regarding the groove 400, configurations the same as those in Embodiment 1 described above are assigned the same reference signs, and a description thereof is omitted. The difference from Embodiment 1 will be mainly described.

### [Embodiment 2]

In Embodiment 2 illustrated in Fig. 6, corners 54 between each sidewall 51 and a bottom wall 52 are formed to have curved surfaces.

In the groove 400 of Embodiment 2, since the corners 54 are each formed to have a curved surface, convection of an electrolyte easily occurs along the corners 54, and heat dissipation of the electrolyte is accelerated in the vicinity of the corners 54. A radius of curvature r of each of the corners 54 may be, for example, 0.1 mm or more and 10 mm or less, and furthermore, 0.2 mm or more and 5 mm or less.

### [Embodiment 3]

In Embodiment 3 illustrated in Fig. 7, inclined surfaces of sidewalls 51 that form a narrow portion 510 are curved surfaces.

In the groove 400 of Embodiment 3, since the inclined surfaces of the sidewalls 51 are curved surfaces, convection of an electrolyte that moves along the inclined surfaces can be further accelerated, and heat dissipation efficiency of the electrolyte due to the convection is further improved. Examples of the shape of the curved surface include a circular arc shape and an elliptical arc shape.

### [Embodiment 4]

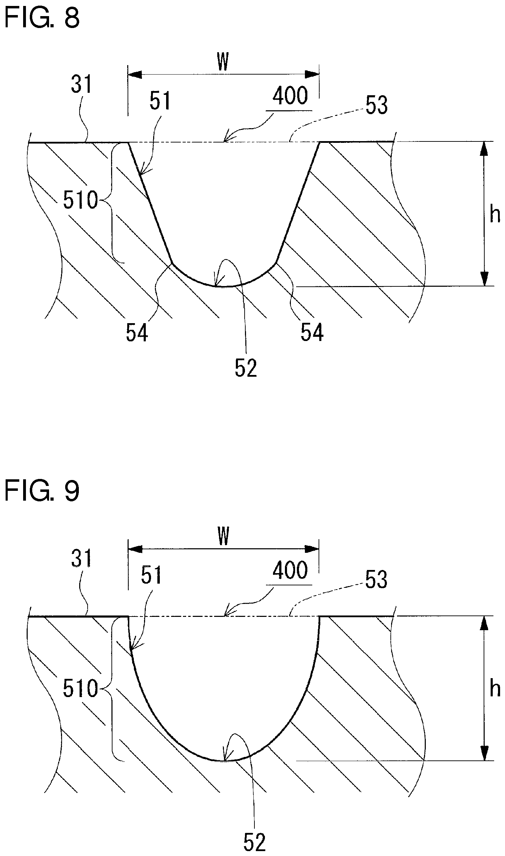

In Embodiment 4 illustrated in Fig. 8, a bottom wall 52 has a curved surface that protrudes in the depth direction.

In the groove 400 of Embodiment 4, since the bottom wall 52 has a curved surface, convection of an electrolyte easily occurs along the curved surface of the bottom wall 52, and heat dissipation of the electrolyte is accelerated in the vicinity of the bottom wall 52.

### [Embodiment 5]

In Embodiment 5 illustrated in Fig. 9, an entire surface of sidewalls 51 and a bottom wall 52 is formed to have a curved surface.

Since the entire surface of the sidewalls 51 and the bottom wall 52 is formed to have a curved surface, that is, the entire wall surface of the groove 400 is formed to have a curved surface, convection of an electrolyte easily occurs along the wall surface (sidewalls 51 and bottom wall 52), and heat dissipation efficiency of the electrolyte due to the convection is further improved. Examples of the cross-sectional shape of the groove 400 include a semi-circular shape and a semi-elliptical shape. In the case of the groove 400 illustrated in Fig. 9, the cross-sectional shape of the groove 400 is a semi-elliptical shape.

### (Others)

In the above embodiments, embodiments in which a bottom wall 52 is provided have been described. Alternatively, the embodiments may include an embodiment in which a bottom wall is not provided. For example, the cross-sectional shape of the groove may be a triangle (specific example, an isosceles triangle) having a bottom serving as a vertex and an opening serving as a base.

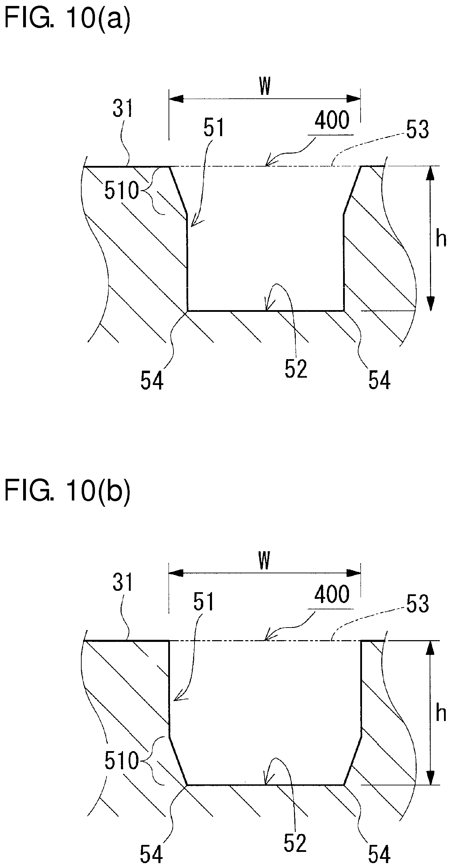

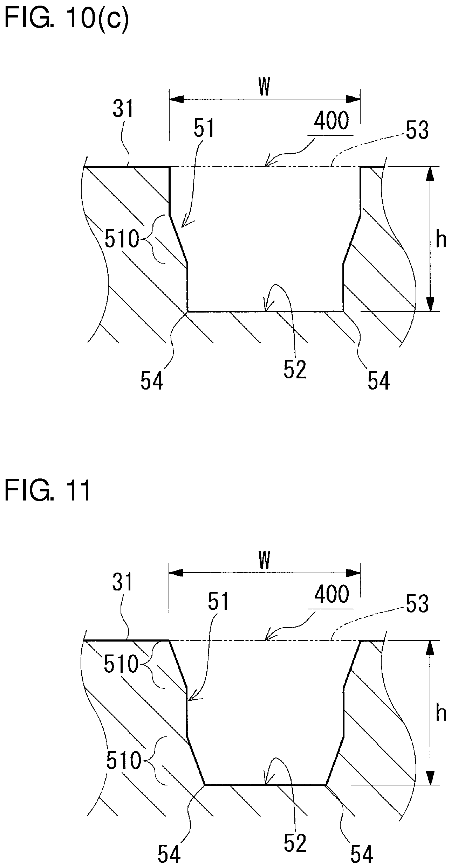

In the above embodiments, embodiments have been described in which the entire surfaces of the sidewalls 51 are inclined surfaces, and the narrow portion 510 is provided over the entire groove in the depth direction. Alternatively, a part of each of the sidewalls 51 may be an inclined surface, the narrow portion 510 may be formed in the part in the depth direction, and the other part may have a substantially uniform distance between the sidewalls 51. Other embodiments include, for example, an embodiment in which, as illustrated in Fig. 10(a), upper ends (the opening 53 side) of sidewalls 51 are inclined, and a narrow portion 510 is provided on the opening 53 side, and an embodiment in which, as illustrated in Fig. 10(b), lower ends (the bottom wall 52 side) of sidewalls 51 are inclined, and a narrow portion 510 is provided on the bottom wall 52 side. In the case illustrated in Fig. 10(a), the distance between the sidewalls 51 is uniform in a portion nearer to the bottom wall 52 than the narrow portion 510. In the case illustrated in Fig. 10(b), the distance between the sidewalls 51 is equal to the width of the opening 53 in a portion extending from the opening 53 to the narrow portion 510. Alternatively, as illustrated in Fig. 10(c), a center of each sidewall 51 may be inclined to form a narrow portion 510 in a halfway position in the depth direction.

Furthermore, the number of the narrow portions 510 is not limited to one and may be two or more. An example thereof is an embodiment in which narrow portions 510 are provided on the opening 53 side and the bottom wall 52 side, as illustrated in Fig. 11. In this case, the angles of inclination of the sidewalls 51 (inclined surfaces) in the narrow portions 510 may be the same or different.

### [Test Example 1]

A plurality of grooves that communicate from a lower edge portion to an upper edge portion of a bipolar plate were formed on each of one surface side and the other surface side of the bipolar plate to produce a bipolar plate having flow channels having a vertical groove structure. Here, as shown in Table 1, a plurality of bipolar plates (refer to Figs. 5 and 6) having different cross-sectional shapes of the grooves (width w of opening, depth h, angle α formed by sidewall and bottom wall, and radius of curvature r of corner) were produced. Cell frames were produced by using the bipolar plates, and a plurality of RF batteries (testing samples A to I) were assembled by using the cell frames. Each of the RF batteries of the testing samples was charged, and pumps were then stopped to cause an electrolyte to be subjected to self-discharge. Subsequently, the RF batteries were disassembled, and the bipolar plates (cell frames) were removed, and the precipitation state of the electrolyte of each of the testing samples was examined and evaluated. Table 1 shows the results. In the evaluation of the "presence or absence of precipitate" shown in Table 1, "A" represents a case where no precipitate was observed, "B" represents a case where although a very small precipitate was present, grooves were not clogged, "C" represents a case where although a somewhat large amount of precipitate was present, the precipitate did not lead to clogging of grooves, and "D" represents a case where a large amount of precipitate was present, and grooves were clogged.

**[Table 1]**

| Testing sample | Bipolar plate | | | | Presence or absence of precipitate |
|---|---|---|---|---|---|
| | Width w (mm) | Depth h (mm) | Angle α (° ) | Radius of curvature r (mm) | |
| A | 3.0 | 2.0 | 100 | 1.0 | A |
| B | 2.0 | 1.3 | 110 | 0.4 | A |
| C | 8.0 | 3.0 | 105 | 2.0 | B |
| D | 3.0 | 7.0 | 100 | 2.5 | B |
| E | 2.0 | 4.0 | 115 | 2.0 | B |
| F | 3.0 | 2.0 | 95 | 0.1 | B |
| G | 12.0 | 2.0 | 105 | 2.0 | C |
| H | 15.0 | 4.0 | 125 | 0.1 | C |
| I | 2.0 | 2.0 | 90 | 0.1 | D |

The results in Table 1 showed that, in testing samples A and B, in which the width w was in the range of 1 to 5 mm, the depth h was in the range of 1 to 5 mm, the angle α was in the range of 95° to 110°, and the radius of curvature r was in the range of 0.2 to 5 mm, no precipitate was observed, and good results were obtained. In testing samples C to F, in which the width w was in the range of 0.5 to 10 mm, the depth h was in the range of 0.5 to 10 mm, the angle α was in the range of 91° to 120°, and the radius of curvature r was in the range of 0.1 to 10 mm, although a very small precipitate was present, the grooves were not clogged, showing that the testing samples could be used enough. In testing samples G and H, in which the angle α was 91° or more, although a somewhat large amount of precipitate was present, the precipitate did not lead to clogging of grooves, showing that no practical problem occurred.

### Reference Signs List

- 1: redox flow battery (RF battery)
- 2: cell stack
- 3: cell frame
- 31: bipolar plate
- 32: frame body
- 33, 34: liquid supply manifold
- 35, 36: liquid discharge manifold
- 33s, 34s: liquid supply slit
- 35s, 36s: liquid discharge slit
- 37: sealing member
- 38: sealing groove
- 40: flow channel
41 introduction channel
42 discharge channel
- 400: groove
410 introduction groove
411 introduction straightening groove
420 discharge groove
421 discharge straightening groove
- 51: sidewall

- 510: narrow portion
- 52: bottom wall
- 53: opening
- 54: corner
- 100: cell
- 101: membrane
- 102: positive electrode cell
- 103: negative electrode cell
- 100P: positive electrolyte circulation mechanism
- 100N: negative electrolyte circulation mechanism
- 104: positive electrode
- 105: negative electrode
- 106: positive electrode electrolyte tank
- 107: negative electrode electrolyte tank
- 108, 109, 110, 111: duct
- 112, 113: pump
- 200: substack
- 210: supply/discharge plate
- 220: end plate
- 230: fastening mechanism

## Claims

1. A bipolar plate (31) disposed between a positive electrode (104) and a negative electrode (105) of a redox flow battery (1), the bipolar plate (31) comprising:
in a surface of the bipolar plate facing at least one of the positive electrode (104) and the negative electrode (105), at least one groove (400) through which an electrolyte flows,
wherein the groove (400) has a pair of sidewalls (51) facing each other in a cross section orthogonal to a direction in which the electrolyte flows,
the groove (400) has a narrow portion in which a distance between the sidewalls (51) decreases in a depth direction of the groove (400), the narrow portion being provided in at least a part of the groove (400) in the depth direction,
the groove (400) has a bottom wall (52),
the bottom wall (52) has a flat surface parallel to the surface of the bipolar plate (31), and a corner (54) between at least one of the sidewalls (51) and the bottom wall (52) is formed to have a curved surface,
wherein the groove (400) has an opening (53) and the width w of the opening (53) is 0.5 mm or more and 10 mm or less,
an angle formed by at least one of the sidewalls (51) and the bottom wall (52) is 91° or more and 120° or less,
a depth h from the opening (53) to the bottom wall (52) in the depth direction of the groove (400) is 0.5 mm or more and 10 mm or less, and
a radius of curvature r of the corner (54) is 0.1 mm or more and 10 mm or less.

2. The bipolar plate (31) according to Claim 1, wherein at least one of the sidewalls (51) in the narrow portion has an inclined surface that is inclined with respect to the depth direction, and the inclined surface is a flat surface.

3. The bipolar plate (31) according to Claim 1, wherein at least one of the sidewalls (51) in the narrow portion has an inclined surface that is inclined with respect to the depth direction, and the inclined surface is a curved surface.

4. The bipolar plate (31) according to any one of Claims 1 to 3, wherein a distance between the sidewalls (51) at any position of the groove (400) in the depth direction is equal to or less than a distance between the sidewalls (51) at a position nearer to the opening (53) than the position.

5. A cell frame (3) comprising the bipolar plate (31) according to any one of Claims 1 to 4 and a frame body (32) disposed on an outer periphery of the bipolar plate (31).

6. A cell stack (2) comprising the cell frame (2) according to Claim 5.

7. A redox flow battery (1) comprising the cell stack (2) according to Claim 6.

## Patentansprüche

1. Bipolare Platte (31), die zwischen einer positiven Elektrode (104) und einer negativen Elektrode (105) einer Redox-Flow-Batterie (1) angeordnet ist, wobei die bipolare Platte (31) umfasst:
in einer Oberfläche der bipolaren Platte, die mindestens einer der positiven Elektrode (104) und der negativen Elektrode (105) zugewandt ist, mindestens eine Nut (400), durch die ein Elektrolyt fließt,
wobei die Nut (400) ein paar Seitenwände (51) aufweist, die einander in einem Querschnitt orthogonal zu einer Richtung, in die der Elektrolyt fließt, gegenüberliegenden, und
wobei die Nut (400) einen schmalen Abschnitt aufweist, in dem ein Abstand zwischen den Seitenwänden (71) in einer tiefen Richtung der Nut (4000) abnimmt, wobei der schmale Abschnitt in mindestens einem Teil der Nut (400) in der tiefen Richtung vorgesehen ist,
die Nut (400) eine Bodenwand (52) aufweist, und
die Bodenwand (52) eine flache Oberfläche parallel zu der Oberfläche der bipolaren Platte (31) aufweist und eine Ecke (54) zwischen mindestens einer der Seitenwände (51) und der Bodenwand (52) ausgebildet ist, eine gekrümmte Oberfläche aufzuweisen,
wobei die Nut (400) eine Öffnung (53) aufweist und die Breite der Öffnung (53) 0,5 mm oder mehr und 10 mm oder weniger beträgt,
ein Winkel, der von mindestens einer der Seitenwände (51) und der Bodenwand (52) gebildet wird, 91° oder mehr und 120° oder weniger beträgt,
eine Tiefe h von der Öffnung (53) zur Bodenwand (52) in Tiefenrichtung der Nut (400) 0,5 mm oder mehr und 10 mm oder weniger beträgt und
ein Krümmungsradius r der Ecke (54) 0,1 mm oder mehr und 10 mm oder weniger beträgt.

2. Bipolare Platte (31) nach Anspruch 1, wobei mindestens eine der Seitenwände (51) in dem schmalen Abschnitt eine geneigte Fläche aufweist, die in Bezug auf die Tiefenrichtung geneigt ist, und die geneigte Fläche eine ebene Fläche ist.

3. Bipolare Platte (31) nach Anspruch 1, wobei mindestens eine der Seitenwände (51) in dem schmalen Abschnitt eine geneigte Fläche aufweist, die in Bezug auf die Tiefenrichtung geneigt ist, und die geneigte Fläche eine gekrümmte Fläche ist.

4. Bipolare Platte (31) nach einem der Ansprüche 1 bis 3, wobei ein Abstand zwischen den Seitenwänden (51) an jeder Position der Nut (400) in der Tiefenrichtung gleich oder geringer ist als ein Abstand zwischen den Seitenwänden (51) an einer Position, die näher an einer Öffnung (53) liegt als die Position.

5. Zellenrahmen (3), umfassend die bipolare Platte (31) nach einem der Ansprüche 1 bis 4 und einen Rahmenkörper (32), der an einem Außenumfang der bipolaren Platte (31) angeordnet ist.

6. Zellenstapel (2), umfassend den Zellenrahmen (2) nach Anspruch 5.

7. Redox-Flow-Batterie (1) mit dem Zellenstapel (2) nach Anspruch 6.

## Revendications

1. Plaque bipolaire (31) disposée entre une électrode positive (104) et une électrode négative (105) d'une batterie à flux redox (1), la plaque bipolaire (31) comprenant :
dans une surface de la plaque bipolaire faisant face à au moins l'une parmi l'électrode positive (104) et l'électrode négative (105), au moins une rainure (400) à travers laquelle un électrolyte s'écoule,
dans laquelle la rainure (400) comporte une paire de parois latérales (51) se faisant face l'une à l'autre dans une section transversale orthogonale à une direction dans laquelle l'électrolyte s'écoule,
la rainure (400) comporte une partie étroite dans laquelle une distance entre les parois latérales (51) diminue dans une direction de la profondeur de la rainure (400), la partie étroite étant disposée dans au moins une partie de la rainure (400) dans la direction de la profondeur,
la rainure (400) comporte une paroi inférieure (52),
la paroi inférieure (52) comporte une surface plate parallèle à la surface de la plaque bipolaire (31), et un coin (54) entre au moins une des parois latérales (51) et la paroi inférieure (52) est formé de façon à avoir une surface incurvée,
dans laquelle la rainure (400) comporte une ouverture (53) et la largeur w de l'ouverture (53) est de 0,5 mm ou plus et 10 mm ou moins,
un angle formé par au moins une des parois latérales (51) et la paroi inférieure (52) est de 91° ou plus et 120° ou moins,
une profondeur h de l'ouverture (53) à la paroi inférieure (52) dans la direction de la profondeur de la rainure (400) est de 0,5 mm ou plus et 10 mm ou moins, et
un rayon de courbure r du coin (54) est de 0,1 mm ou plus et 10 mm ou moins.

2. Plaque bipolaire (31) selon la revendication 1, dans laquelle au moins une des parois latérales (51) dans la partie étroite comporte une surface inclinée qui est inclinée par rapport à la direction de la profondeur, et la surface inclinée est une surface plate.

3. Plaque bipolaire (31) selon la revendication 1, dans laquelle au moins une des parois latérales (51) dans la partie étroite comporte une surface inclinée qui est inclinée par rapport à la direction de la profondeur, et la surface inclinée est une surface incurvée.

4. Plaque bipolaire (31) selon l'une quelconque des revendications 1 à 3, dans laquelle une distance entre les parois latérales (51) à une position quelconque de la rainure (400) dans la direction de la profondeur est égale ou inférieure à une distance entre les parois latérales (51) à une position plus proche de l'ouverture (53) que la position.

5. Cadre de cellule (3) comprenant la plaque bipolaire (31) selon l'une quelconque des revendications 1 à 4 et un corps de cadre (32) disposé sur une périphérie externe de la plaque bipolaire (31).

6. Pile de cellules (2) comprenant le cadre de cellule (2) selon la revendication 5.

7. Batterie à flux redox (1) comprenant la pile de cellules (2) selon la revendication 6.
